# EUROPEAN PATENT SPECIFICATION

(11) **EP 2 620 887 B1**
(45) Date of publication and mention of the grant of the patent: **31.12.2014**
(21) Application number: 12000465.0
(22) Date of filing: 25.01.2012
(51) Int. Cl.: G06F 21/56

(54) **Method and device for electronic data auditing**
Verfahren und Vorrichtung zur Prüfung elektronischer Daten
Procédé et dispositif de contrôle des données électroniques

(43) Date of publication of application: 31.07.2013
(73) Proprietor: Cryptic Software Limited, London EC1A 2AY (GB)
(72) Inventor: Duke, David John, Corby Northamptonshire NN18 8RE (GB)
(74) Representative: Franks & Co (South) Limited

(56) References cited:
- Alexander Hanel: "Hooked on Mnemonics Worked for Me - An Intro to Creating Anti-Virus Signatures", , 18 January 2011 (2011-01-18), pages 1-8, XP55028901, Retrieved from the Internet: URL:http://hooked-on-mnemonics.blogspot.nl /2011/01/intro-to-creating-anti-virus-sign atures.html [retrieved on 2012-06-05]
- William Underwookd: "Extensions of the UNIX File Command and Magic File for File Type Identification", , 30 September 2009 (2009-09-30), XP55028939, Retrieved from the Internet: URL:http://perpos.gtri.gatech.edu/publicat ions/TR 09-02.pdf [retrieved on 2012-06-05]
- YULIANG ZHENG ET AL: "HAVAL - A One-Way Hashing Algorithm with Variable Length of Output", ADVANCES IN CRYPTOLOGY AUSCRYPT'92, 31 December 1993 (1993-12-31), pages 83-104, XP55028938,

## Description

### Field of the Invention

The present invention relates to a method, and to a device embodying the method, for independently auditing data stored in a data processing device. More particularly, the present invention relates to a method and a device for forensically examining data stored in data processing devices.

### Introduction

In data processing systems and, particularly, networked systems wherein data files are stored at and communicated between terminals, the integrity and identity of data files is routinely verified with a data processing method known as 'hashing'. Known hashing algorithms such as MD5 and SHA-1 are often used to uniquely identify data files and their copies, and to check that the contents of a copy have not been altered relative to the original version.

Any given data file, regardless of whether it is an image file, a set of executable instructions or a word processing document, begins with a first byte at position zero and ends with an end byte at a position depending on its file storage requirements, for instance 1 million. A computer currently stores between 200,000 and 300,000 data files on average, an average data file is currently over a million bytes in size, and data files can currently go up to 8 billion bytes or more in size. The MD5 hashing algorithm reads every byte of a data file between the first and last positions and outputs a string of 26 alphanumerical characters, wherein the string is uniquely representative of the data file.

If a copy of the original data file is altered at some point in time, for instance maliciously by a computer virus embedding itself in the data file in order to distribute itself across a network, then processing the altered data file with the hashing algorithm results in a different string of 26 alphanumerical characters, relative to the original unaltered file, and this will be the case even if the computer virus manages not to alter the number of bytes of the infected data file. A description on how hardware can be identified by hashing files is shown e.g. in A. Hanel http://hooked-on-mnemonics.blogspot.nl/2011/01/intro-to-creating-anti-virus-signatures.html.

An indication of a security threat posed by the computer virus may be provided by the simple fact that hashing the altered data file results in a conflicting string relative to the original data file, however the hashing algorithm cannot identify the computer virus, nor even positively identify the altered file for auditing purposes.

MD5 hashing is therefore a computationally - expensive process, particularly when considering the fact that the additional data that may cause a string mismatch, for instance the computer virus, is usually found at the beginning of the data file, often within the first 1024 bytes thereof, which stores information about the structure, function and characteristics of the data file.

Nevertheless, MD5 and SHA-1 -grade hashing algorithms are still preferred in exacting data file auditing applications, for instance forensic computer examination which requires certainty about data file identities. The purpose of forensic computer examination is to identify data files stored in a user's computing device, which may be used as evidence in the context of legal proceedings against or involving the user, such as criminal prosecution.

Various jurisdictions have respective standards of forensic data examination, however a near - universal constraint is that the data storage means, usually a computer mass storage device such as a hard disc drive, must not be contaminated by the data file auditing processes in any way, to ensure that the evidence, i.e. the original data files, is not procedurally tainted. In this context, if data is written to the storage means during the forensic examination, then a doubt is cast as to the authenticity and validity of the evidence.

Typically therefore, when forensic services seize a user's computing device, the data storage means is physically removed from the computer and an identical copy of its contents is created for audit processing purposes, to ensure that the original evidence remains unaltered in any way. This is a user - intensive and lengthy process, compounded by the choice of algorithm and complicated by any anti - tampering measures the user may have previously embedded in its computing device, particularly passwords, file access permissions and sets of instructions designed to automatically delete, encrypt, scramble and/or otherwise deny access to, some or all the data files on the disc upon unauthorised or invalid access.

Thus, auditing all the data files stored in a single computer with prior art data auditing processes routinely requires many hours, and even days when forensic services have several devices to examine at any one time. This problem is compounded when legislative or circumstantial constraints may allow the suspect user to evade the judicial procedure, or allow the suspect user's deeds to continue prejudicially.

### Summary of the Invention

The present invention provides a method of auditing data files stored in a data processing device, within a very short period of time relative to prior art data auditing processes. The present invention also provides a data storage means, which stores an alternative, independent operating system for a user device and instructions embodying the method, for auditing the data independently of a device's installed operating system.

According to an aspect of the present invention, there is provided a method of identifying a data file stored in a data processing device, wherein the data file comprises a number N of bytes, comprising the steps reading a number N₁ of data file bytes according to a sampling interval, processing the bytes read with a hash function, outputting a hash string H₁ of alphanumerical characters, and comparing the hash string H₁ with stored hash strings H₁ to identify the data file.

In a preferred embodiment, the sampling interval is preferably logarithmic, whereby more bytes are read at the beginning of the data file than towards its end. The sampling interval is preferably independent of the total number N of bytes of the data file.

In a preferred embodiment, number N₁ of bytes is preferably equal or inferior to 50. The maximum number N₁ of bytes is based on an arbitrarily - defined file size limit of four billion bytes, however the file size is used herein by way of non-limitative example, and it will be readily understood by skilled persons that this number is variable and may change according to e.g. application requirements, operating and file systems development, and further variables outside the scope of the present method.

The number of characters in the hash string H₁ is preferably proportional to the number N of bytes of the data file. The method preferably comprises the further step of storing the hash string H₁ in a database when the step of comparing cannot identify the data file.

For the purposes of the above, the data file may be any one or a combination from the group comprising image files, video files, audio files, multimedia files, text files, open format files, files in proprietary format, executable instructions, compressed files, encrypted files.

For the purposes of the above still, at least a portion of the data file constitutes any one or a combination from the group comprising computer viruses; snuff; paedophilia; pornography; piracy; fraud; espionage; steganography, worms, exploits, root kitting.

The data processing device may be any from the group comprising desktop computers, portable computers, tactile computers, mobile telephone handsets, network servers, personal organisers, personal media players, televisions, set top boxes, micro - controllers.

According to yet another aspect of the present invention, there is therefore provided a data storage device having memory means and an interface for connecting the memory means to a data processing terminal, wherein the memory means stores instructions which, when processed by the processor of a data processing terminal to which the data storage device is connected via the interface, configure the data processing terminal to perform the above method steps.

### Brief Description of the Drawings

The present invention will be more clearly understood from the following description of an embodiment thereof, given by way of example only, with reference to the accompanying drawings, in which:
Figure 1 shows a networked environment including a plurality of terminals.
Figure 2 shows a typical hardware structure of a first terminal shown in Figure 1.
Figure 3 shows a typical hardware structure of a second terminal shown in

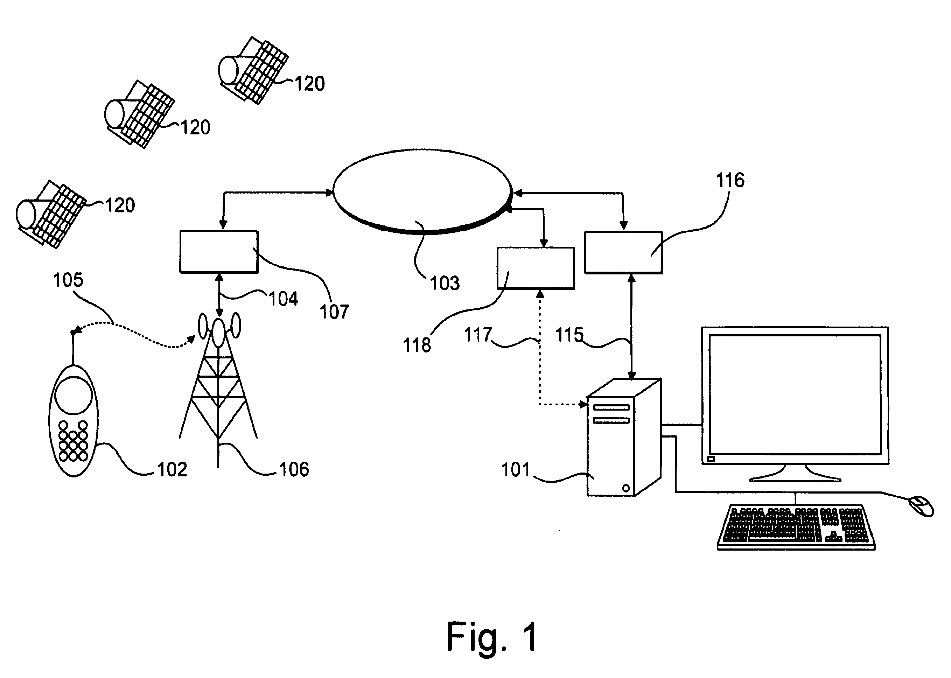

Figure 1, having mass storage means.

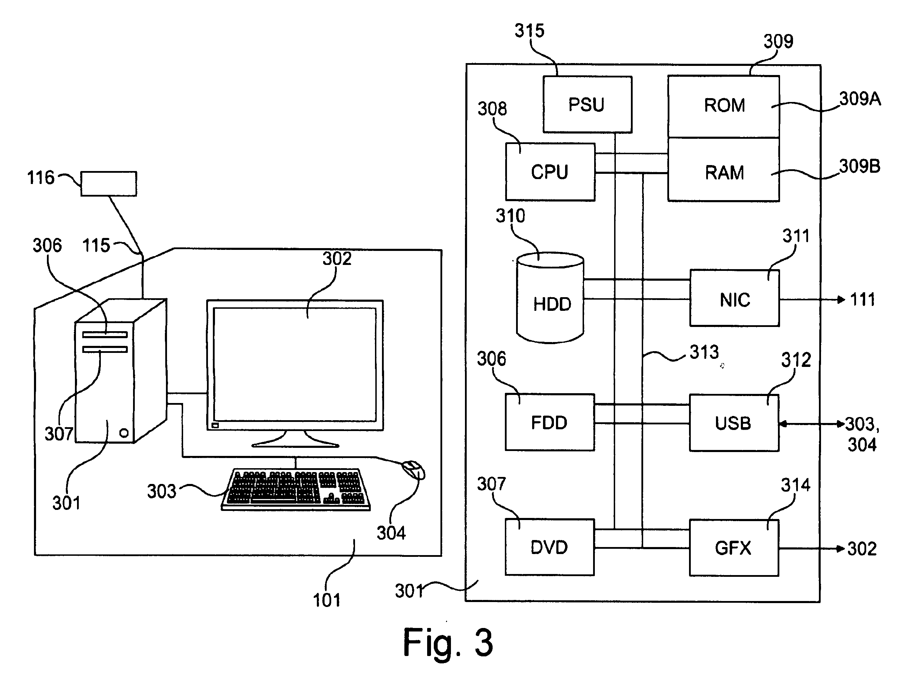

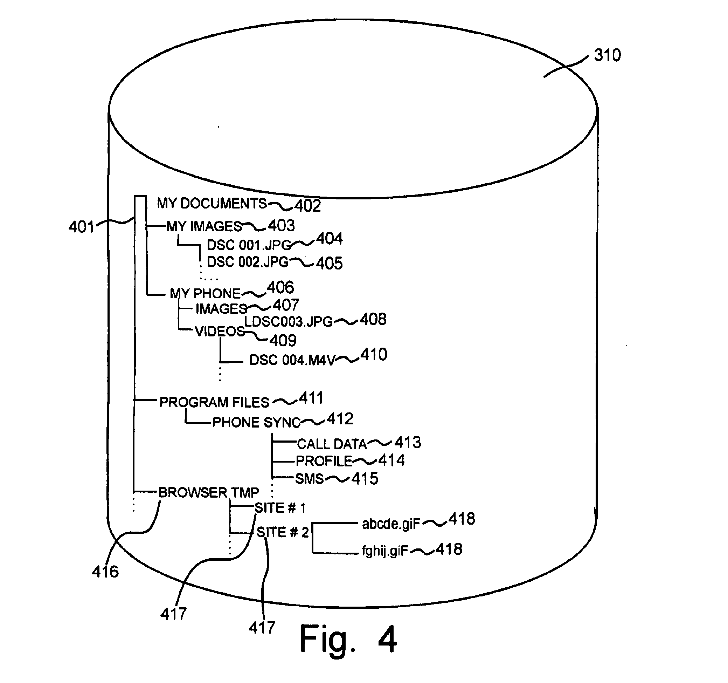

Figure 4 illustrates typical data contents of the mass storage means of Figure 3, in the form of data files organised in a file system.

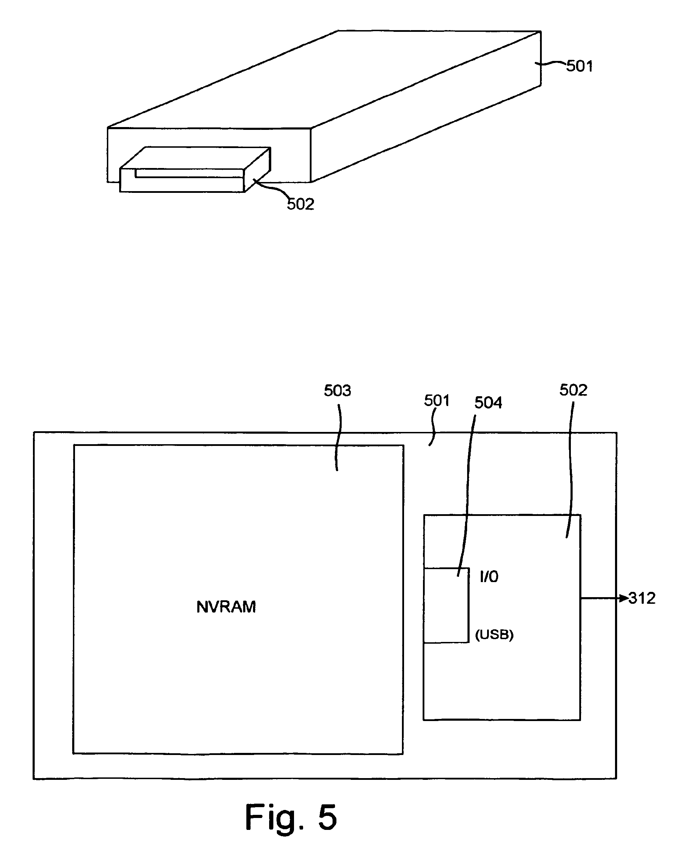

Figure 5 shows a hardware structure of a data storage device according to a first embodiment of the invention.

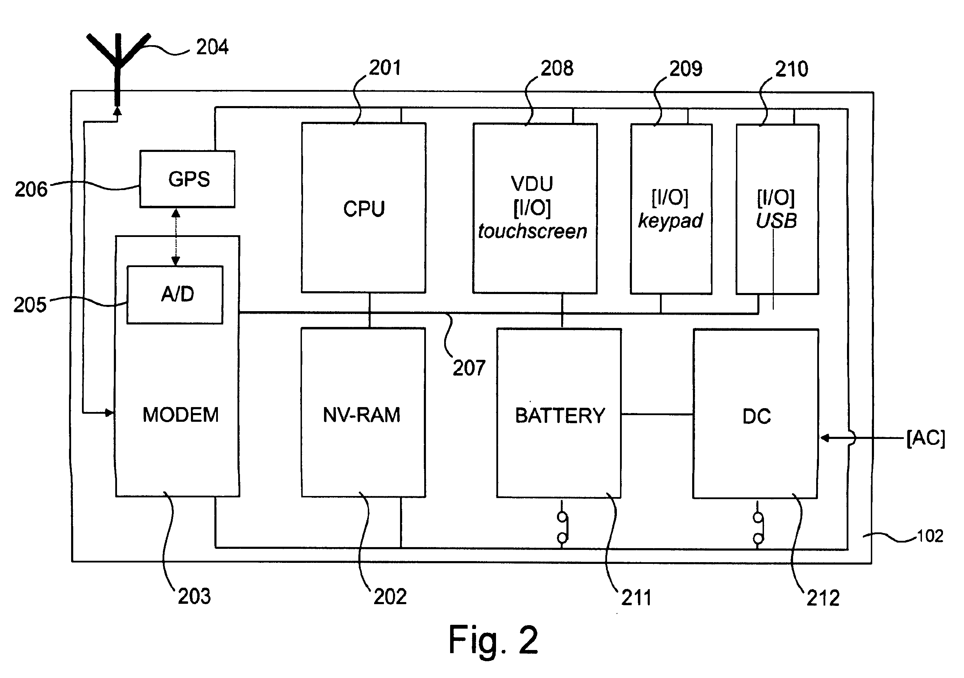

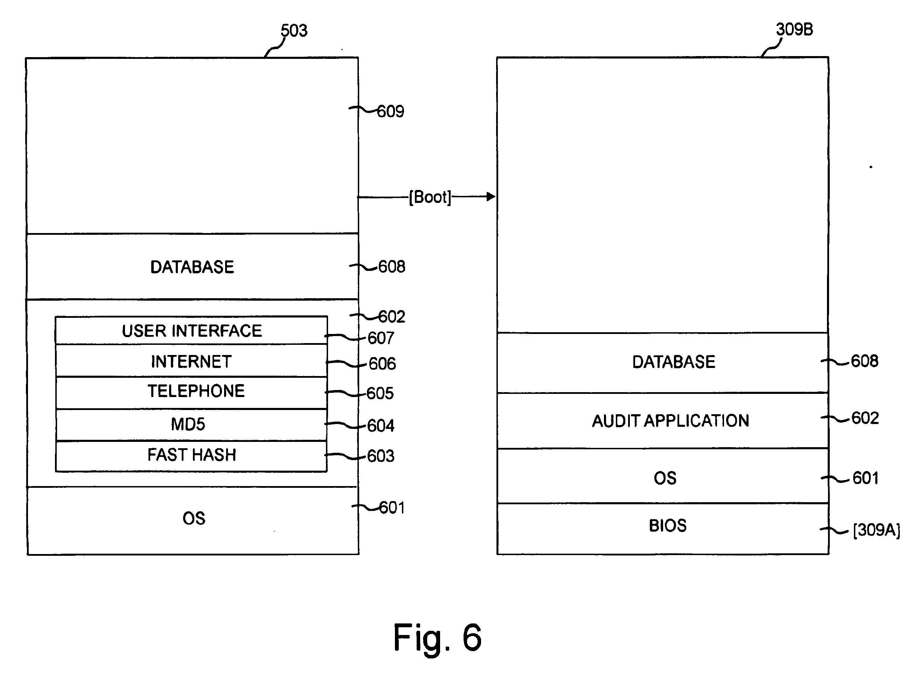

Figure 6 shows instructions and a database stored in the data storage device of Figure 5 and loaded into memory means of the terminal of Figure 2.

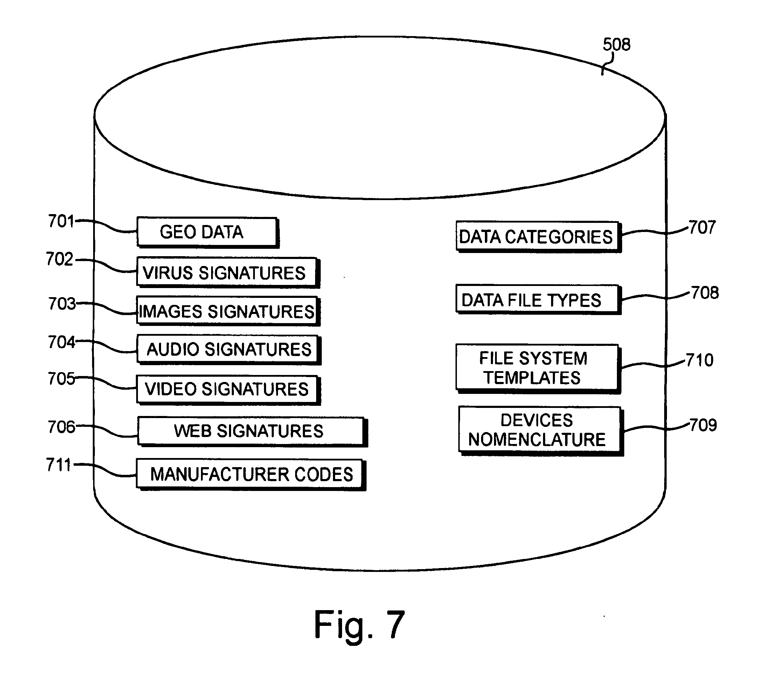

Figure 7 illustrates the contents of the database of Figure 6.

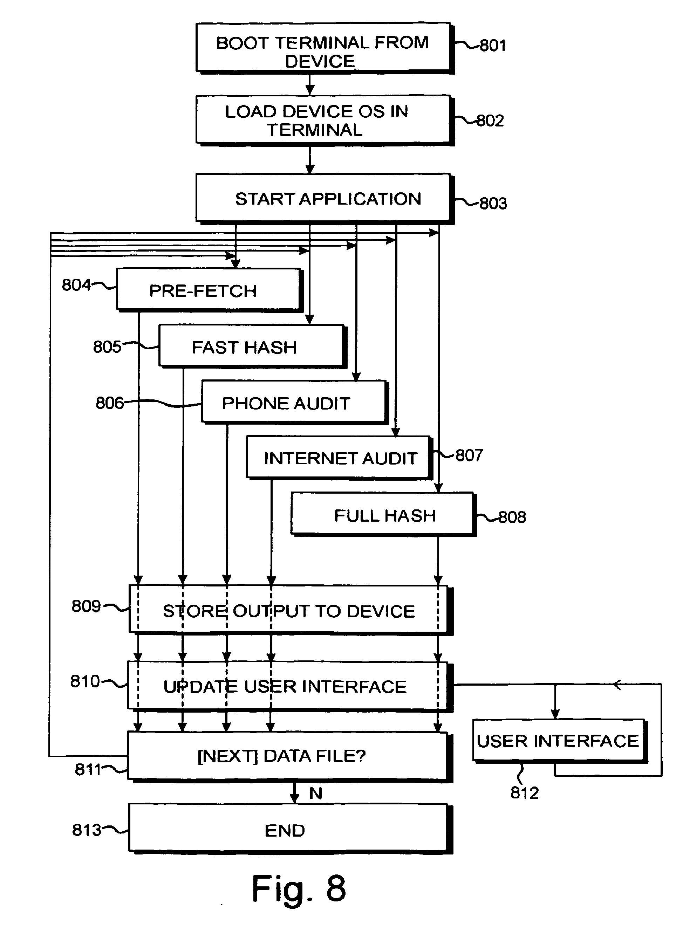

Figure 8 details steps of the data processing method according to a first embodiment of the invention, including a plurality of parallel data processing threads.

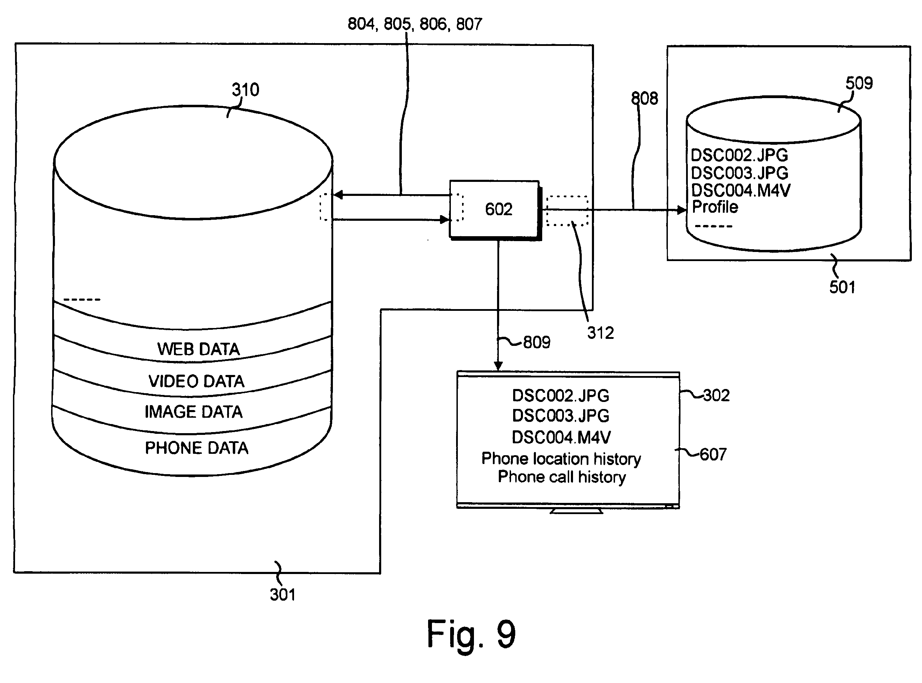

Figure 9 is a logic diagram of the data contents of the mass storage means of Figure 4 audited by the data processing method of Figure 8.

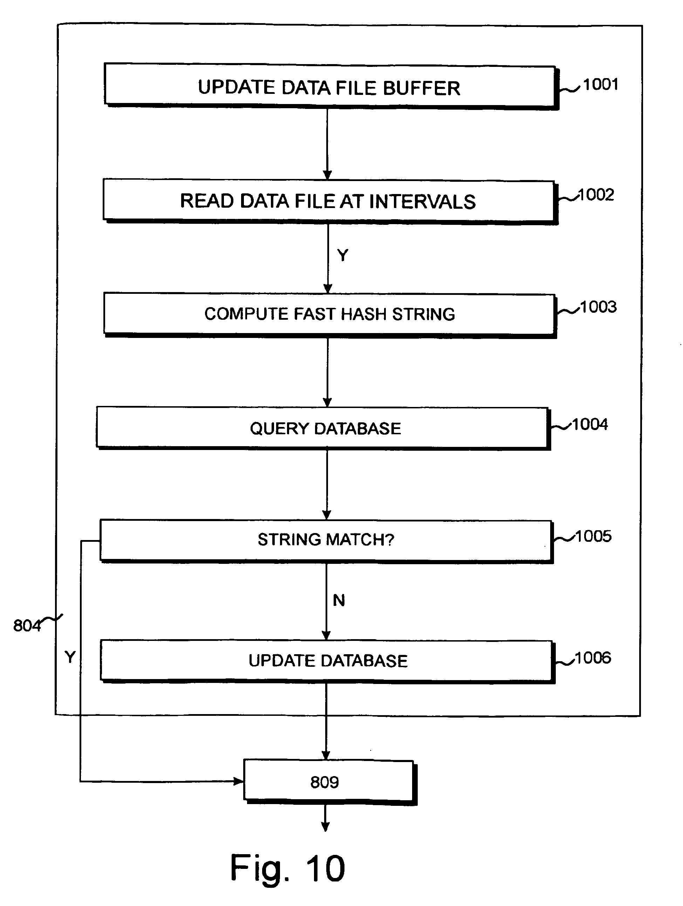

Figure 10 details steps of a data processing method in a first of the plurality of parallel data processing threads.

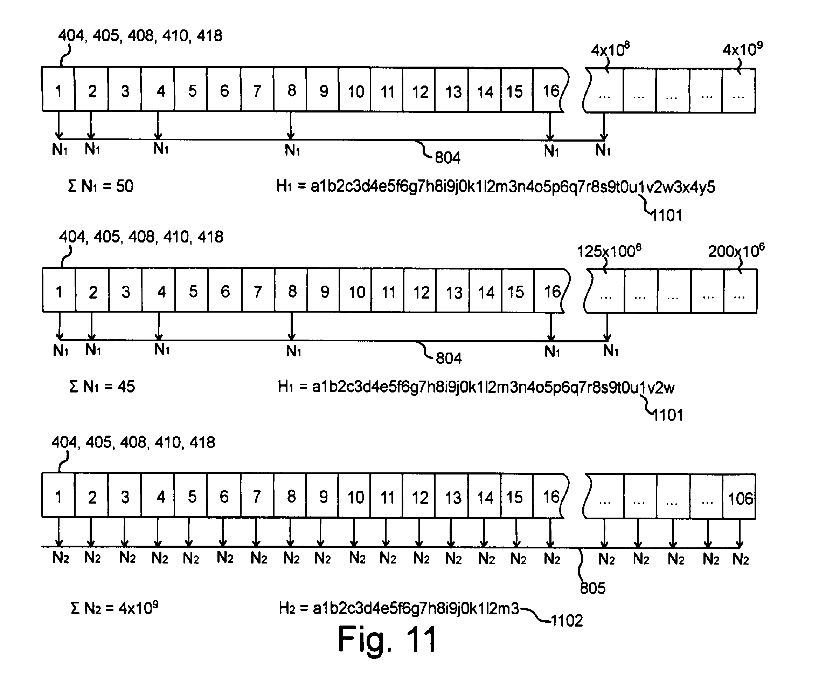

Figure 11 is a logic diagram of a data file of Figures 4 and 9 processed by the data processing method of Figure 10 and by a second of the plurality of parallel data processing threads.

### Detailed Description of the Drawings

The words "comprises/comprising" and the words "having/including" when used herein with reference to the present invention are used to specify the presence of stated features, integers, steps or components but does not preclude the presence or addition of one or more other features, integers, steps, components or groups thereof.

Figure 1 shows a networked environment including a plurality of data processing terminals, comprising at least one user terminal 101 and at least one mobile telephone handset 102. Generally, each terminal 101, 102 may be any data processing device computing having at least data processing means and data storage means. In the example, the at least one user terminal 101 is a desktop computer connected to a first communication network 103, and the at least one mobile telephone handset 102 is connected to a second communication network 104. In the example still, the user of the user terminal 101 is also the user of the mobile telephone handset 102.

The first communication network 103 is a Wide Area Network ('WAN'), an example of which is the Internet. The user terminal 101 may have wired communication emitting and receiving functionality over a wired Local Area Network ('LAN') 115 conforming to the IEEE 802.3 ('Gigabit Ethernet') standard, wherein communication is performed as voice, alphanumeric and/or audio-video data using the Internet Protocol (IP), Voice data over IP ('VoIP') protocol, Hypertext Transfer Protocol ('HTTP') or Secure Hypertext Transfer Protocol ('HTTPS'), corresponding digital signals being relayed respectively to or from the user terminal 101 by a wired router 116 interfacing the user terminal 101 to the first communication network 103.

Alternatively, or in addition, the user terminal 101 may have wireless communication emitting and receiving functionality over a Wireless Local Area Network ('WLAN') 117 conforming to the IEEE 802.11 ('Wi-Fi') standard, wherein communication is performed as voice, alphanumeric and/or audio-video data using the same IP, VolP, HTTP or HTTPS protocols, corresponding digital signals being relayed respectively to or from the user terminal 101 by a wireless router 118 interfacing the user terminal 101 to the first communication network 103.

The second communication network 104 is a cellular telephone network configured according to any or all of the Global System for Mobile Communication ('GSM'), General Packet Radio Service ('GPRS'), International Mobile Telecommunications-2000 (IMT - 2000, 'W-CDMA' or '3G') network industry standards, wherein the mobile telephone handset 102 receives or emits voice, text, audio and/or image data encoded as a digital signal over a wireless data transmission 105.

The digital signal is relayed respectively to or from the handset by the geographically - closest communication link relay 106 of a plurality thereof, which allows digital signals to be routed between the handset 102 and their destination by means of a remote gateway 107. The gateway 107 is for instance a communication network switch, which couples digital signal traffic between wireless telecommunication networks, such as the network within which wireless data transmissions 105 take place and the first communication network 103. The gateway 107 further provides protocol conversion if required, for instance if the handset 102 uses the WAP or HTTPS protocol to communicate data. In addition to the above, the mobile telephone handset 102 may have wireless telecommunication emitting and receiving functionality over the WLAN 105 in addition to GSM, GPRS, W-CDMA and/or 3G.

A typical hardware architecture of a mobile telephone handset 102 is shown in Figure 2 in further detail, by way of non-limitative example.

The handset 102 firstly includes a data processing unit 201, for instance a general-purpose microprocessor ('CPU'), acting as the main controller of the handset 102 and which is coupled with memory means 202, comprising non-volatile random-access memory ('NVRAM').

The cardholder mobile terminal 102 further includes a modem 203 to implement the wireless communication functionality, as the modem provides the hardware interface to external communication systems, such as the GSM or GPRS cellular telephone network 104 shown in Figure 1. An aerial 204 coupled with the modem 203 facilitates the reception of wireless signals from nearby communication link relays 106. The modem 203 includes an analogue-to-digital converter 205 ('ADC') for demodulating wavelength wireless signals received via the antenna 204 into digital data, and reciprocally for outgoing data.

The handset 102 further includes self-locating means in the form of a GPS receiver 206, wherein the ADC 205 receives analogue positional and time data from orbiting satellites 120, which the data processing unit 201 or a dedicated data processing unit processes into digital positional and time data.

The handset 102 may further include imaging means 207 in the form of an electronic image sensor, for capturing image data which the data processing unit 201 or a dedicated data processing unit processes into digital image data.

The CPU 201, NVRAM 202, modem 203, GPS receiver 206 and optional digital camera 207 are connected by a data Input / Output bus 208, over which they communicate and to which further components of the handset 102 are similarly connected, in order to provide wireless communication functionality and receive user interrupts, inputs and configuration data.

Alphanumerical and/or image data processed by CPU 201 is output to a video display unit 209 ('VDU'), from which user interrupts may also be received if it is a touch screen display. Further user interrupts may also be received from a keypad 210 of the handset, or from an external human interface device ('HiD') connected to the handset via a Universal Serial Bus ('USB') interface 211. The USB interface advantageously also allows the CPU 201 to read data from and/or write data to an external or removable storage device, and to interface the handset 102 to the user terminal 101 for data archiving purposes. Power is provided to the handset 102 by an internal module battery 212, which an electrical converter 213 charges from a mains power supply as and when required.

A typical hardware architecture of the user terminal 101 is shown in Figure 3 in further detail, by way of non-limitative example.

The data processing device 101 is a computer configured with a data processing unit 301, data outputting means such as video display unit (VDU) 302, data inputting means such as HiD devices, commonly a keyboard 303 and a pointing device (mouse) 304, as well as the VDU 202 itself if it is a touch screen display, and data inputting/outputting means such as the wired network connection 115 to the communication network 103, a magnetic data-carrying medium reader/writer 306 and an optical data-carrying medium reader/writer 307.

Within data processing unit 301, a central processing unit (CPU) 308 provides task co-ordination and data processing functionality. The CPU 308 is preferably a multi-core processor having several cores, each apt to process a respective data processing thread simultaneously to the others. Examples of multi-core processors include the Intel i3, i5 and i7 processors manufactured by the Intel Corporation of Santa Clara, California, USA and the AMD Phenom X2, X4 and X6 manufactured by the Advanced Micro Devices Corporation of Sunnyvale, California, USA.

Instructions and data for the CPU 308 are stored in memory means 309. Memory means 309 comprises non-volatile random-access memory ('NVRAM') or Read-Only Memory ('ROM') 309A, in which a first set of instructions for the CPU 308, known as the Basic Input / Output System ('BIOS') is permanently stored for initialising the terminal hardware whenever it is started up. Memory means 309 further comprises Random-Access Memory ('RAM'), in which a second set of instructions for the CPU 308, known as the Operating System ('OS'), is loaded from a Hard Disk Drive ('HDD') unit 310 for using the terminal whenever it is started up. The OS is for instance Windows 7 Professional, distributed by the Microsoft Corporation of Redmond, Washington, USA.

The HDD 310 facilitates non-volatile storage of the instructions and the data in data files. A wireless network interface card (NIC) 311 provides the interface to the network connection 115. A universal serial bus (USB) Input / Output interface 312 facilitates connection to the keyboard and pointing devices 303, 304, as well as a multitude of further USB - configured devices, including a data storage device as shown in Figure 4.

All of the above devices are connected to a data Input / Output bus 313, to which the magnetic data-carrying medium reader/writer 306 and optical data-carrying medium reader/writer 307 are also connected. A video adapter 314 receives CPU instructions over the bus 313 for outputting processed data to VDU 302. All the components of data processing unit 301 are powered by a power supply unit 315, which receives electrical power from a local mains power source and transforms same according to component ratings and requirements.

The typical file data contents of the HDD310 are shown in Figure 4 in further detail, by way of non-limitative example. It is important to note that the Figure provides a graphical representation of example data files in an example file system, in a manner similar to the graphical user interface of a file browser, for ease of reference and for not unnecessarily obscuring the present description. As will be understood from the foregoing description, the data file types and the file system of the HDD 310 are immaterial to the method of the present invention.

In the example, data files are grouped in a plurality of file folders, optionally having file sub-folders therein, wherein data files may be grouped according to type, function and/or user defined parameters. A first main folder 402 is for instance called "My Documents" and includes a first sub-folder 403 called "My Images". A plurality of image data files 404, 405 are shown within the sub-folder 403, which groups data files according to file type. The folder 402 may include a further sub-folder 406 called "My Phone", which groups data files according to provenance, particularly a mobile telephone handset 102. Accordingly, the sub-folder 406 may include a first sub-folder 407 called "Images", in which image data files 408 captured with the digital camera 207 of a mobile telephone handset 102 are archived. The sub-folder 406 may include a second sub-folder 409 called "Video", in which video data files 410 again captured with the digital camera 207 of a mobile telephone handset 102 are archived.

Another main folder 411 is called "Program Files" and routinely include a plurality of sub-folders 412, each grouping data files for a specific data processing application, thus including sets of instructions for the CPU 308 and the data files it requires to perform its function(s). In the example, the folder 411 includes a sub-folder 412 called "Phone Sync" corresponding to an application for archiving all of the data stored in the NVRAM 203 of a mobile handset 102, when it is connected to the terminal 101 via their respective USB interfaces 210, 312. The sub-folder 412 therefore includes a first sub-folder 413 called "Call Data", which groups data files representative of telephone numbers called by the handset 102, call dates, call times and duration, and the like. The sub-folder 412 includes a further sub-folder 414 called "Profile", which groups data files representative of the handset 102 manufacturer, model, mobile telephony network subscription, handset configuration parameters, historical GPS-derived telephone locations, and the like. The sub-folder 412 includes a further sub-folder 415 called "SMS", which groups data files representative of short message service communications, including messages sent and received, message recipients and addressees, message communication dates, time stamps and the like.

A third main folder 416 is called "Browser TMP"and groups transient data files accessed via, and copied to the user terminal 101 from, the Internet 103, which are processes and output to the user interface of a browser application. Accordingly, the folder 416 includes a plurality of sub-folders 417, typically one for each website accessed via the Internet 103. Each sub-folder 417 in turn groups a plurality of data files, the type and content of which varies according to the website content. Typically, each sub-folder 417 includes a plurality of image data files 418, but may further include text data files, internet page formatting instructions, small sets of instructions known as applets, and subscription data entities commonly known as "cookies".

A typical hardware architecture of a data storage device 501 according to a first embodiment of the present invention is shown in Figure 5 in further detail, by way of non-limitative example. The data storage device 501 firstly includes a universal serial bus (USB) Input / Output interface 502 for facilitating connection of the device to the corresponding USB interface 312 of the user terminal 101. The USB interface 502 is connected to a non - volatile NAND flash memory ('NVRAM') 503 having a data storage capacity of, for instance, 16 Gigabytes, via a controller module 504 which performs buffering, addressing and error correcting functions required when reading data from and writing data to the memory 503.

With reference to Figure 6 now, the memory 503 permanently stores a third set of instructions 601 for the CPU 308 of the user terminal 101, which is an alternative Operating System ('OS') to the habitual Operating System of the user terminal 101 stored in HDD 310 as previously described in relation to Figure 3, therefore independent of the user terminal 101. The memory 503 next stores a set of instructions for configuring the CPU 308 of the terminal 101 to perform the method according to the invention. The instructions 602 include a plurality of data processing modules.

A first "Pre-Fetch" module 603 rapidly identifies the type of each data file stored in the HDD 310, by accessing relevant sections of the file system of HDD 310 according to reference file system information stored in the data storage device 501, and by checking a portion of the bytes constituting the file header data against reference file type data stored in the data storage device 501, as described hereafter.

A second "Fast Hash" module 604 processes each data file stored in the HDD 310 with a logarithmic function that will be described in further detail herein below, and the purpose of which is to provide a fast identification of those data files that are known to be of interest to a forensic examiner.

A third "Telephony" module 605 audits all of the data files grouped in selected portions 406, 412 of the HDD 310 in order to extract such data of interest to a forensic examiner as call history, mobile handset geographical positioning history, image data file geographical information and the like.

A fourth "Internet" module 606 audits all the data files grouped in selected portions 416 of the HDD 310 to again extract such data of interest to a forensic examiner as network addresses of remote terminals that have been accessed over the WAN 103, uniform resource locators, image data files 418, cookies information and the like.

A fifth "MD5 Hash" module 607 audits each data file stored in the HDD 310 comprehensively, as described hereinbefore, and provides a redundancy check for the output of the first "Fast Hash" module 603, in order to validate the evidence in case an output of the "Fast Hash" module 603 for a data file collides with another output for another data file.

The set of instructions 602 further includes a user interface module 608 for displaying the respective real-time output of each module 603 to 606 on the display 302.

In a preferred embodiment of the set of instructions 602 processed by a multi-core CPU 308, each module is adapted to be processed by a respective thread, simultaneously to the others, according to a phased sequence.

Each data file is processed by each module 603 to 607 in turn, according to a module prioritisation schedule substantially according to the order of description of the modules above, starting with the fastest data-processing "Pre Fetch" module 603 and ending with the slowest data-processing "MD5" module 607, and with the fastest modules such as the "Pre Fetch" and "Fast hash" modules apt to process very many more files within a data processing period, than the slower "Phone", "Internet" and "MD5" modules.

However, in a terminal having a single - core CPU, the application 602 preferably completes the data processing of "Pre-Fetch" module 603, before initialising and completing the data processing of "Fast Hash" module 604, then initialising and completing the data processing of "Phone" module 605, and so on and so forth until the last data processing of "MD5" module 60X is completed. Thus, even in the case of a terminal with relatively slow or limited CPU resources, a forensic examiner is advantageously still able to begin audit the data contents of HDD 310 at least as early as the "Pre-Fetch" module 603 is beginning to output results, since the user interface module 608 displays the output of all the modules in real-time.

Alternative embodiments of the invention envisage at least two further modules included in the sequence of data processing modules 603, 604, 605, 606 and 607. A "Face Scanning" module may usefully process image data in files identified as image files by the "Pre-Fetch" module 603, for recognising facial features of subjects or persons represented by the image data, and improve the compatibility of application 602 with known and future forensic facial recognition applications outside the scope of the present disclosure. A "Steganography" module may usefully process data files, folders and containers, including those contained in 'archive' files compressed with known applications such as Winzip® or Winrar® to locate executable programs embedded therein.

The memory 503 further stores a database 609, an example structure and example contents of which are described in further detail with reference to Figure 7 herein. The remaining portion 610 of the memory 503 is used by the application 602 for copying therein all audited data files from the HDD 310, or such audited data files from the HDD 310 as may be selected by a forensic examiner via the user interface module 607.

In a preferred embodiment of the method according to the invention, if a terminal 101 must be audited for forensic purposes, then the Basic Input / Output System stored in the memory 309A is accessed by the forensic examiner when the computer is initialised and is instructed to "boot" from the data storage device 501 connected to the terminal USB interface 312 rather than from the HDD 310, i.e. to load its operating system, therefore the independent operating system 601, from the data storage device 501, according to techniques that will be familiar to both the skilled person and the average data processing terminal user.

Accordingly, the terminal 101 obtains the alternative OS 601 from the data storage device 501, which it loads into its memory 309B, in addition to the audit application 602 and the database 609. The terminal 101 is therefore configured for operation entirely according to the data processing instructions provided in the USB device 501, independently of the habitual OS of the terminal 101. The habitual OS of the terminal 101 is entirely bypassed, as are any anti-tempering measures that the user(s) of the terminal 101 may have previously embedded in HDD 310 and which require the basic data processing functionality provided by the habitual OS.

With reference to Figure 7 now, the database 609 is for instance a relational database and organises and stores both reference data, which is used by the five data processing modules 603, 604, 605, 606 and 607 for validating their respective output, and module-configuring data, for adapting the processing steps of some of the modules, for instance the "Telephony" module 605 and the "Internet" module 606, according to the file system and habitual OS stored in HDD 310.

By way of non-limitative example, reference data includes geographical data 701, which comprises countries, cities, roads, streets and their respective latitude and longitude coordinates. Reference data further includes computer virus signatures 702, which comprises both fast-hash H₁ and MD5-hash strings of data files known to harbour computer viruses. In substantially the same manner, reference data further includes image signatures 703, audio signatures 704, video signatures 705 and web signatures 706, each of which comprises fast-hash H₁ and MD5-hash strings of, respectively, image data files, audio data files, video data files and Internet data files, all known to be of potential interest to a forensic examiner and representing illegal and/or criminal data content.

By way of non-limitative example, module - configuring data may include data categories 707, which are used to sort audited data files according to one or more categories of illegal and/or criminal content, such as pornography, paedophilia, terrorism, cryptography, stenography, cybercrime and the like. The module - configuring data may further include data file types 708, which are used to define types of data files and their expected content according to their extension, e.g. BMP, JPG, GIF, CDR and more as image data files, AVI, MPG, MP4, M4V as video data files, and so on and so forth.

The module-configuring data may further include a devices nomenclature 709 corresponding to both unique and common characteristics of many communication devices, particularly mobile telephone handsets 102, and details of any generic and/or model-specific synchronising applications, for instance as described as 412 in connection with Figure 4.

The module-configuring data may further include file system template data 710, representative of expected file system structures of each known operating system, non - limitative examples of which include the NTFS and FAT 32 file structures of a Windows OS, the HFS+ file structure of Mac OSX, the FHS file structure of Linux and the ReFS file structure of Windows Server 8, as described in connection with Figure 4. Likewise, with reference to the "Pre Fetch" module 603, the module-configuring data may further include standard file copying addresses (installation paths) of programs and their files in known operating systems.

The module-configuring data may further include a list of standard manufacturer passwords and codes 711, used to access or circumvent a default access restriction of the terminal 101, for instance by its BIOS or a fingerprint reader, for loading the alternative OS 601, audit application 602 and database 609 therein.

The data processing steps performed by the CPU 308 configured by the independent OS 601 and the audit application 602 are shown as a logical sequence in Figures 8 and illustrated in Figure 9, wherein the first step 801 comprises booting the terminal 101 from the USB device 501, as described in connection with Figure 6 hereinbefore. The alternative OS 601 is loaded in the memory 309B of the terminal at step 802 and the auditing application automatically begins processing data files stored in the HDD 310 and outputs a user interface to the display unit 302 for a forensic examiner to observe the data file auditing results in real-time, at step 803.

At step 804, the pre - fetch module 603 audits the header portion of a first data file stored in the HDD 310 and associates each audited data file with a file type 708, optionally also with a typical file type icon for facilitating user review of same once rendered in the user interface at step 810.

The fast hash module 604 processes a first data file stored in the HDD 310 with a logarithmic hash function at step 805, substantially simultaneously to the pre - fetch module 603 of step 804 if the CPU 308 has a multi-core architecture, otherwise at a subsequent processor cycle according to the previously described phased processing. The fast hash module 604 is substantially faster than the hashing function performed by the MD5 hash module 607 on that same data file at step 808.

At the simultaneous or sequential step 806, the telephone module 605 locates data files specifically related to one or more mobile telephone handset(s) 102, for instance as grouped in sub-folders 406 and 412 and audits a first data file therein for content, chronological information and geographical information.

At the simultaneous or sequential step 807, the internet module 606 locates data files specifically related to one or more websites accessed via the Internet 103, for instance as grouped in main folder 416 and audits a first data file therein for content, chronological information and user data.

At the simultaneous or sequential step 808, the MD5 module 607 processes a first data file stored in the HDD 310 with a conventional hash function, typically based on the MD5 algorithm, to confirm validity of output.

Each data processing thread 804, 805, 806, 807 and 808 is processed substantially simultaneously with and independently from the others, or substantially sequentially according to a phased sequence designed to prioritise the rapid location and identification of files with the pre - fetch and fast - hash modules 603, 604. The auditing application 602 stores audited data files in the memory portion 509 of the device 501 at step 809 and update its user interface 608 at step 810, substantially in real-time according to the various threads' output. The forensic examiner is therefore permanently aware of which data files have been found in the HDD 310 of the terminal 101, that maybe of interest, as having content falling within one or more categories 707.

Upon completing the auditing of a data file, each data processing thread 804, 805, 806, 807, 808 proceeds to audit a next data file at step 811, whilst the forensic examiner is able to interact with the auditing application 602 via the user interface thereof at step 812, for instance to select an audited data file for output to the display 302 for further examination and/or any ulterior purpose outside the scope of the present disclosure.

When all concurrent threads 804, 805, 806, 807, 808 have processed all data files of the HDD 310, then the forensic auditing of the data files stored at the terminal 101 is complete and the application may then be terminated at step 813, for instance by switching off the terminal 101 and disconnecting the USB device 501 from the USB interface 312. This method advantageously prevents any writing or over-writing of data on the HDD 310, particularly as the independent OS 601 does not require any caching on the HDD 310, contrary to many known operating systems. All data processing operations are performed in a transient manner within the volatile memory 309B of the terminal 101, and any permanent data writing is confined to the USB device 501. This advantageously removes the need to physically dismantle the terminal 101 to extract the HDD 310 therefrom.

The data processing steps performed by the fast hash module 604 at step 804 are described in further detail with reference to Figures 10 and 11. Further to selecting a first data file, or a next data file at step 811, for instance image data file 405, at step 1001 the fast hash module 604 updates a buffer storing data representative of audited data file names, to ensure that no data file stored in the HDD 310 is unnecessarily processed twice. At step 1002, the fast hash module 604 reads a byte N₁ of the data file at each of a plurality of sampling points respectively separated by logarithmic intervals, in such manner that more samples are read from the beginning of the data file starting at byte zero, than are read towards the end of the data file.

At step 1003, the bytes read are processed into a unique, data file - respective string H₁ of alphanumerical characters, or hash H₁, having a length equal to the number of sampling points.

In the preferred embodiment, the logarithmic intervals are based on a maximum of 50 sampling points for a maximum file size of four billion bytes whereby, depending on the size of the data file being processed by the module 604, the hash H₁ may have a length inferior to 50 alphanumerical characters when the file has a size smaller than 4 billion bytes, as shown in Figure 11 by way of example and as described hereinafter. Considering current average file sizes, the hash H₁ may routinely have a length of 30 to 40 alphanumerical characters. Conversely, because the reading step 1002 is not dependent on the file size, if the file being processed is over four billion bytes in size, then the hash H₁ will be 50 alphanumerical characters in length, and the bytes beyond the file size limit will be ignored by the operation. It will be readily understood by the skilled reader, that this file size limit is variable and may change according to e.g. application requirements, operating and file systems development and further variables outside the scope of the present method.

At step 1004, the fast hash module 604 queries the database 609 to locate any matching signature 702, 703, 704, 705, 706 for the hash H1 of the processed data file and a question is subsequently asked at step 1005, as to whether the query has returned a match.

If the question of step 1005 is answered positively, the logic of the fast hash module 604 proceeds directly to step 809 to store the audited data file selected at step 1001 in the memory 509 of the USB device 501, whereby the user interface module 608 will update the user interface of the application output to the display unit 302 with data representative of that audited file, with which the forensic examiner may interact according to step 812. Control will eventually proceed to step 811 to select a next data file to audit according to steps 1001 to 1005.

Alternatively, if the question of step 1005 is answered negatively, then the logic of the fast hash module 604 proceeds to step 1006 instead, to store the hash H₁ of step 1003 in a relevant table of the database 609, as the file corresponding to this hash H₁ has not previously been encountered by the application 602. Usefully, step 1006 allows the reference file signature data maintained in the database 609 for the application 602 to be continually updated in real - time, as the application is used across terminals and forensic procedures over time, such that the question of step 1005 will be answered positively the next time this file or an identical copy thereof is encountered by the application, further speeding up the processing of the fast hash module 604. The distribution of updated databases 609 between respective, remote users of the present invention within the networked environment of e.g. Figure 1 would further benefit this advantageous feature of the system and method. After the data recording operation of step 1006, the logic of the fast hash module 604 then proceeds to step 809 as previously described. Accordingly, every data file stored in the HDD 310 is processed with steps 1001 to 1006.

With reference to Figure 11 in particular, the fast hash module 604 reads a maximum of 50 bytes N₁ from the millions or billions of bytes representing the current data file, whereas the MD5 hash module 607 reads every single byte N₂ from the millions or billions of bytes representing the current data file. As previously noted, the number of bytes N₁ read may vary, either in relation to the size of the file or according to varying requirements of accuracy.

Accordingly, given a same current data file and a simultaneous process starting time, the fast hash module 604 is able to complete its respective auditing process much faster than the conventional MD5 hash module 607 and, depending on the respective sizes of the data files successively selected, the fast hash module 604 is able to audit a plurality of data files before the conventional MD5 hash module 607 has completed its own auditing process of the first selected file.

Moreover, given a same current data file, the fast hash module 604 outputs a longer hash string H₁, potentially of up to 50 characters and typically of 30 to 40 characters 1101 in the two examples shown in Figure 11, relative to the shorter conventional hash string H₂ of 26 characters 1102 output by the MD5 hash module 607 and, advantageously, this longer hash string H₁ provides a higher - resolution representation of the audited data file.

Since the user interface module 608 updates the user interface of the auditing application 602 with the respective output of each thread 603, 604, 605, 606 and 607 in real time, the forensic examiner therefore receives information about audited data files quasi - instantaneously, inasmuch as any such audited data files contain criminal and/or illegal content referenced in the database 609.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD- or DVD-ROM, or magnetic recording medium, e.g. a floppy disk or hard disk. The carrier may be an electrical or optical signal which may be transmitted via an electrical or an optical cable or by radio or other means.

For instance, the third set of instructions 601, the instructions 602 and plurality of data processing modules thereof, and the database 608 may instead be recorded on an optical medium, which is read by the optical data-carrying medium reader/writer 307 when booting and configuring the terminal for forensic auditing according to substantially the data processing steps of Figure 8, and wherein a data storage device 501 is optionally connected to the terminal USB interface 312 for writing audited files thereto according to step 809. Alternatively still, audited files may instead be written to an alternative optical medium optionally placed in the data-carrying medium reader/writer 307 after booting and configuring the terminal for forensic auditing according to substantially the data processing steps of Figure 8. Implementing variations will be readily envisaged by the skilled person without departing from the scope of the present disclosure.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method of identifying a data file stored in a data processing device, wherein the data file comprises a number N of bytes, comprising the steps of;
reading a number N₁ of data file bytes according to a sampling interval;
processing the bytes read with a hash function;
outputting a hash string H₁ of alphanumerical characters; and
comparing the hash string H₁ with stored hash strings H₁ to identify the data file;
**characterized by** the sampling interval is such that more bytes are read from the beginning of the data file than towards the end of the data file; and
the sampling interval is independent of the number N of bytes.

2. A method of identifying a data file according to claim 1, wherein the number N₁ of bytes is equal or inferior to 50.

3. A method of identifying a data file according to any of claims 1 to 2, wherein the number of characters in the hash string H₁ is proportional to the number N of bytes of the data file.

4. A method of identifying a data file according to any of claims 1 to 3, wherein the maximum number N₁ of bytes is based on a file size limit of four billion bytes.

5. A method of identifying a data file according to any of claims 1 to 4, comprising the further step of storing the hash string H₁ in a database when the step of comparing cannot identify the data file.

6. A method according to any of claims 1 to 5, wherein the data file is any one or a combination from the group comprising image files, video files, audio files, multimedia files, text files, open format files, files in proprietary format, executable instructions, compressed files, encrypted files.

7. A method according to any of claims 1 to 6, wherein at least a portion of the data file constitutes any one or a combination from the group comprising computer viruses; snuff; paedophilia; pornography; piracy; fraud; espionage; steganography.

8. A method according to any of claims 1 to 7, wherein the data processing device is any from the group comprising desktop computers, portable computers, tactile computers, mobile telephone handsets, network servers, personal organisers, personal media players, televisions, set top boxes, micro controllers.

9. A data storage device having memory means and an interface for connecting the memory means to a data processing terminal, wherein the memory means stores instructions which, when processed by the processor of a data processing terminal to which the data storage device is connected via the interface, configure the data processing terminal to perform the method according to any of claims 1 to 8.

## Patentansprüche

1. Verfahren zum Identifizieren einer Datendatei, die in einem Datenverarbeitungsgerät gespeichert sind, wobei die Datendatei aus einer Anzahl N von Bytes besteht, umfassend die folgenden Schritte:
das Lesen einer Anzahl N₁ der Datendatei-Bytes entsprechend einem Abtastintervall;
das Verarbeiten der gelesenen Byes mit einer Hash-Funktion;
das Ausgeben einer Hash-Zeichenfolge H₁ aus alphanumerischen Zeichen; und
das Vergleichen der Hash-Zeichenfolge H₁ mit gespeicherten Hash-Zeichenfolgen H₁ zum Identifizieren der Datendatei;
**dadurch gekennzeichnet, dass** ein solches Abtastintervall gewählt wird, dass mehr Bytes am Beginn der Datendatei gelesen werden als gegen Ende der Datendatei; und
das Abtastintervall unabhängig von der Anzahl N der Bytes ist.

2. Verfahren zum Identifizieren einer Datendatei gemäß Anspruch 1, wobei die Anzahl N₁ der Bytes kleiner oder gleich 50 ist.

3. Verfahren zum Identifizieren einer Datendatei gemäß einem der Ansprüche 1 bis 2, wobei die Anzahl der Zeichen in der Hash-Zeichenfolge H₁ proportional zur Anzahl N der Bytes der Datendatei ist.

4. Verfahren zum Identifizieren einer Datendatei gemäß einem der Ansprüche 1 bis 3, wobei die maximale Anzahl N₁ der Bytes auf einer Dateigrößengrenze von vier Milliarden Bytes basiert.

5. Verfahren zum Identifizieren einer Datendatei gemäß einem der Ansprüche 1 bis 4, des Weiteren umfassend den Schritt des Speicherns der Hash-Zeichenfolge H₁ in einer Datenbank, wenn der Schritt des Vergleichens die Datendatei nicht identifizieren kann.

6. Verfahren gemäß einem der Ansprüche 1 bis 5, wobei es sich bei der Datendatei um eines oder eine Kombination aus der Gruppe handelt, welche umfasst: Bilddateien, Videodateien, Audiodateien, Multimediadateien, Textdateien, Dateien in offenem Format, Dateien in proprietärem Format, ausführbare Anweisungen, komprimierte Dateien, verschlüsselte Dateien.

7. Verfahren gemäß einem der Ansprüche 1 bis 6, wobei mindestens ein Abschnitt der Datendatei einem oder einer Kombination aus der Gruppe entspricht, welche umfasst; Computerviren; extreme Gewalt (Snuff); Pädophilie; Pornografie; Piraterie; Betrug; Spionage; Steganografie.

8. Verfahren gemäß einem der Ansprüche 1 bis 7, wobei es sich bei dem Datenverarbeitungsgerät um eines aus der Gruppe handelt, welche umfasst: Desktopcomputer, tragbare Computer, berührungsempfindliche Computer, Mobiltelefone, Netzwerkserver, persönliche Organiser, persönliche Mediaplayer, Fernsehgeräte, Set-Top-Boxen, Mikrocontroller.

9. Datenspeichergerät mit einer Speichereinrichtung und einer Schnittstelle zum Verbinden der Speichereinrichtung mit einem Datenverarbeitungsendgerät, wobei die Speichereinrichtung Befehle speichert, die - sofern Sie durch den Prozessor eines Datenverarbeitungsendgeräts verarbeitet werden, mit dem das Datenspeichergerät über die Schnittstelle verbunden ist - das Datenverarbeitungsendgerät dazu konfigurieren, das Verfahren gemäß einem der Ansprüche 1 bis 8 auszuführen.

## Revendications

1. Un procédé pour identifier un fichier de données stocké dans un dispositif de traitement de données, dans lequel le fichier de données comprend un nombre N d'octets, comprenant les étapes de ;
lire un nombre N₁ d'octets de fichier de données selon un intervalle d'échantillonnage ;
traiter les octets lus avec une fonction de hachage ;
sortir une chaîne de hachage H₁ de caractères alphanumériques ; et
comparer la chaîne de hachage H₁ avec des chaînes de hachage stockées H₁ pour identifier le fichier de données ;
**caractérisé par le fait que** l'intervalle d'échantillonnage est tel que plus d'octets sont lus à partir du début du fichier de données que vers la fin du fichier de données ; et
l'intervalle d'échantillonnage est indépendant du nombre N d'octets.

2. Un procédé pour identifier un fichier de données selon la revendication 1, dans lequel le nombre N₁ d'octets est égal ou inférieur à 50.

3. Un procédé pour identifier un fichier de données selon n'importe lesquelles des revendications 1 à 2, dans lequel le nombre de caractères dans la chaîne de hachage H₁ est proportionnel au nombre N d'octets du fichier de données.

4. Un procédé pour identifier un fichier de données selon n'importe lesquelles des revendications 1 à 3, dans lequel le nombre maximum N₁ d'octets est basé sur une limite de taille de fichier de quatre milliards d'octets.

5. Un procédé pour identifier un fichier de données selon n'importe lesquelles des revendications 1 à 4, comprenant l'étape supplémentaire de stocker la chaîne de hachage H₁ dans une base de données quand l'étape de comparaison ne peut pas identifier le fichier de données.

6. Un procédé selon n'importe lesquelles des revendications 1 à 5, dans lequel le fichier de données est un élément ou une combinaison d'éléments du groupe composé de fichiers image, de fichiers vidéo, de fichiers audio, de fichiers multimédia, de fichiers texte, de fichiers format ouvert, de fichiers au format propriétaire, d'instructions exécutables, de fichiers compressés, de fichiers chiffrés.

7. Un procédé selon n'importe lesquelles des revendications 1 à 6, dans lequel au moins une portion du fichier de données constitue un élément ou une combinaison d'éléments du groupe composé de virus informatiques ; meurtres filmés en direct ; pédophilie ; pornographie ; piratage ; fraude ; espionnage ; stéganographie.

8. Un procédé selon n'importe lesquelles des revendications 1 à 7, dans lequel le dispositif de traitement de données est n'importe quel dispositif du groupe composé d'ordinateurs de bureau, d'ordinateurs portables, d'ordinateurs tactiles, de combinés téléphoniques mobiles, de serveurs réseau, d'organiseurs personnels, de lecteurs multimédia personnels, de télévisions, de boîtiers décodeurs, de microcontrôleurs.

9. Un dispositif de stockage de données ayant un moyen de mémoire et une interface pour connecter le moyen de mémoire à un terminal de traitement de données, dans lequel le moyen de mémoire stocke des instructions qui, lorsque traitées par le processeur d'un terminal de traitement de données auquel le dispositif de stockage de données est connecté via l'interface, configurent le terminal de traitement de données pour réaliser le procédé selon n'importe lesquelles des revendications 1 à 8.
